# FASCICULE DE BREVET EUROPEEN

(11) **EP 2 920 128 B1**
(45) Date de publication et mention de la délivrance du brevet: **15.07.2020**
(21) Numéro de dépôt: 13803146.3
(22) Date de dépôt: 18.11.2013
(51) Int. Cl.: C04B 2/04, C01F 11/02, B01F 17/00

(54) **SUSPENSION AQUEUSE DE CHAUX, PROCEDE DE PREPARATION ET UTILISATIONS**
WÄSSRIGE SUSPENSION AUS CALCIUMHYDROXID, VERFAHREN ZUR HERSTELLUNG DAVON UND VERWENDUNGEN DAVON
AQUEOUS SUSPENSION OF CALCIUM HYDROXIDE, METHOD FOR THE PRODUCTION THEREOF, AND USES OF SAME

(30) Priorité: 19.11.2012 FR 1260968; 18.12.2012 US 201261738516 P
(43) Date de publication de la demande: 23.09.2015
(73) Titulaire: COATEX, 69730 Genay (FR)
(72) Inventeur: BELLI, Fabrizio, I-24010 Sedrina Bg (IT); MONGOIN, Jacques, F-69650 Quincieux (FR); BERLENDIS, Angelo, I-24060 Torre De Roveri Bg (IT)
(74) Mandataire: Balmefrezol, Ludovic Francis Pierre
(86) Numéro de dépôt international: PCT/FR2013/052765
(87) Numéro de publication internationale: WO 2014/076436

(56) Documents cités:
- EP-A1- 0 313 483
- EP-A1- 0 892 020
- FR-A1- 2 810 261
- FR-A1- 2 913 420
- FR-A1- 2 939 055
- JP-A- H09 122 471

## Description

La présente invention concerne le domaine technique de la préparation des suspensions aqueuses de dihydroxyde de calcium. Plus précisément, la présente invention concerne une suspension à base de chaux comprenant un nouvel additif, ainsi qu'un procédé de préparation d'une telle suspension. De telles suspensions sont notamment utilisées comme agent de neutralisation chimique dans des procédés industriels ou domestiques.

Le dihydroxyde de calcium Ca(OH)₂, également appelé chaux éteinte ou chaux hydratée, est obtenu par hydratation de l'oxyde de calcium CaO, également appelé chaux vive, selon la réaction exothermique suivante :

CaO + H₂O → Ca(OH)₂

Dans le cadre de la présente invention, on utilise pour désigner les particules de Ca(OH)₂ les termes « hydroxyde de calcium » ou les termes « dihydroxyde de calcium », cela de manière équivalente.

Les produits à base d'hydroxyde de calcium se présentent sous diverses formes : sous forme de poudre (produit sec sous forme pulvérulente), sous forme de pâtes plastiques ou sous forme de suspensions/dispersions aqueuses (lait de chaux).

La présente invention concerne plus particulièrement un produit à base d'hydroxyde de calcium qui se trouve sous forme d'une suspension aqueuse. De telles suspensions aqueuses de chaux éteinte peuvent être mises en œuvre comme agents de neutralisation chimique dans de nombreux procédés industriels. On cite à titre indicatif le traitement des effluents industriels, par exemple gazeux telles que les fumées acides. On cite également le traitement des eaux potables, usées ou industrielles.

Les suspensions aqueuses de chaux éteinte se caractérisent notamment par leur teneur en matière sèche (% en poids). L'homme du métier cherche classiquement à augmenter la teneur en matière sèche dans les suspensions aqueuses de chaux éteinte, pour des raisons principalement économiques : en augmentant la teneur en matière sèche des suspensions aqueuses de chaux éteintes, on réduit ainsi le coût relatif au transport et à la manutention par tonne de produit. En outre, on réduit les nuisances dues à la manipulation de poudres (hygiène, manutention) et on facilite la mise en œuvre.

Pour accroitre la teneur en matière sèche des suspensions aqueuses de chaux éteinte, on peut notamment utiliser un agent dispersant.

On désigne par « agent dispersant » un agent qui possède la capacité d'améliorer l'état de dispersion des particules de Ca(OH)₂ au sein de la suspension aqueuse.

Concrètement, lorsque ces agents sont utilisés dans les suspensions aqueuses de matière minérale, ils induisent une diminution de la viscosité. Ainsi, une suspension aqueuse de matière minérale comportant un agent dispersant présentera une viscosité inférieure à celle de la même suspension aqueuse de matière minérale ne contenant pas ledit agent dispersant.

Un certain nombre de documents d'art antérieur décrit l'utilisation d'agent dispersant.

Le document EP 0 061 354 (Blue Circle) décrit la mise en œuvre de polyéletrolytes oligomériques anioniques, par exemple homopolymères de l'acide (méth)acrylique, carboxymethylcellulose ou sulphonate, pour fabriquer des dispersions aqueuses de chaux éteinte.

Le document FR 2 677 351 (Italcementi) décrit une suspension aqueuse concentrée d'hydrate de calcium, qui contient au moins 40 % de chaux hydratée solide obtenue à partir de chaux hydratée en poudre, de chaux éteinte ou de chaux vive, et un polymère hydrosoluble qui peut être un polyacrylate de métal alcalin ou alcalino-terreux.

Le document EP 0 594 332 (Rohm & Haas) décrit l'utilisation d'agents dispersants anioniques polymériques pour obtenir des dispersions aqueuses de chaux vive ou de chaux éteinte. Ces agents dispersants sont choisis parmi les homopolymères, les copolymères et les terpolymères ayant des fonctionnalités acide carboxylique, acide sulphonique ou acide phosphonique. Les monomères qui confèrent une telle fonctionnalité acide incluent par exemple, l'acide acrylique, l'acide méthacrylique, l'acide crotonique, l'acide maléique, l'anhydride maléique, l'acide itaconique, l'acide mesaconique, l'acide fumarique, l'acide citraconique, l'acide vinyl acétique, l'acide acryloxy propionique, l'acide vinyl sulfonique, l'acide styrène sulfonique, l'acide 2-acrylamido-2-methylpropanesulfonique, l'acide allylsulfonique, l'acide allyl phosphonique, l'acide vinyl phosphonique et l'acide vinyl sulfonique.

Le document US 2008/0011201 (Ultimate Nominees) décrit l'utilisation combinée d'un dispersant polycarboxylate et d'un dispersant carbohydrate pour préparer un lait de chaux pour des applications dans le domaine de l'alimentation et de l'eau potable. En particulier, selon ce document, le dispersant carbohydrate est un sucre, choisi notamment parmi les aldoses, les saccharides, les disaccharides et les polysaccharides. Egalement, des exemples de dispersant polycarboxylate sont notamment les sels de copolymères styrène anhydride maléique ou les sels de polyéther polycarboxylate. Ce document décrit notamment l'utilisation combinée d'un copolymère de type peigne, nommément l'Ethacryl® G (dispersant polycarboxylate de la société Coatex) et d'un sirop de glucose (dispersant carbohydrate) pour préparer une suspension/dispersion de chaux hydratée à 50 %.

Le document EP 0 848 647 (Chemical Lime Company) décrit l'utilisation d'un agent dispersant du type polyélectrolyte anionique, en combinaison avec un hydroxyde de métal alcalin, pour préparer une suspension de chaux qui peut être de la chaux vive ou de la chaux éteinte. Le polyélectrolyte anionique est choisi parmi l'acide polyacrylique, l'acide polycarboxylique et l'acide polyphosphorique, les copolymères d'acide polyacrylique, d'acide polycarboxylique et d'acide polyphosphorique et leurs sels de métal alcalin.

Le document FR 6 687 396 (Lhoist) décrit quant à lui un procédé d'extinction d'oxyde de calcium ou d'oxyde de magnésium en présence d'ions SO₃⁻, SO₄²⁻ ou Cl⁻ et en ce qu'en cours de réaction ou en fin de réaction on ajoute un polymère ou un copolymère comprenant des monomères choisis parmi l'acide acrylique et ses sels, l'acide méthacrylique et ses sels, l'acide vinylbenzylsulfonique et ses sels, l'acide acrylamino-2-méthylpropane-sulfonique et ses sels, le méthacrylate de 2-sulfoéthyle et ses sels.

Le document JP 09 122471 (Nippon Shokubai) décrit l'utilisation de copolymères constitués d'un monomère carboxylique et d'un monomère du type (méth)acrylate de polyalkylèneglycol comme agent dispersant permettant d'obtenir des dispersions aqueuses de chaux éteinte ayant une faible viscosité. Ce document illustre l'utilisation à cet effet de copolymères dont le poids moléculaire est inférieur à 20 000 g/mol.

Le document WO 2010/106111 (Lhoist) concerne des compositions comprenant de la chaux éteinte et/ou de la chaux vive et un polymère organique incorporé dans la phase solide de la chaux éteinte. Les polymères décrits dans ce document peuvent être non ionique, anionique, cationique ou amphotère et de nature très variée. Ils peuvent être obtenus à partir de monomères choisis parmi les monomères anioniques possédant une fonction carboxylique ou possédant une fonction acide sulfonique, les monomères non ioniques (acrylamide, méthacrylamide, N- vinyl pyrrolidone, vinylacétate, alcool vinylique, esters acrylate, alcool allylique, le N-vinyl acétamide, la N-vinylformamide), les monomères cationiques (ADAME, MADAME quaternisés ou salifiés, DADMAC, APTAC MAPTAC), éventuellement en association avec un ou plusieurs monomère(s) hydrophobe(s) choisi(s) préférentiellement dans le groupe comprenant les esters d'acide (méth)acrylique à chaîne alkyle, arylalkyle et/ou éthoxylée, les dérivés de (méth)acrylamide à chaîne alkyle, arylalkyle ou dialkyle, les dérivés allyliques cationiques, les dérivés de (méth)acryloyle hydrophobes anioniques ou cationiques, ou les monomères anioniques et/ou cationiques dérivés de (méth)acrylamide portant une chaîne hydrophobe.

En utilisant les polymères de l'art antérieur, les inventeurs ont néanmoins constaté un problème de sédimentation lorsque les suspensions sont conservées sans agitation pendant un délai excédant 3 jours, notamment lors de leur transport. Une pâte se forme alors au fond des cuves contenant les suspensions qui rend difficile voire impossible leur pompage.

Les inventeurs ont, en outre, noté que ce problème de sédimentation était du à une rhéologie mal adaptée des suspensions actuellement disponibles et à une mauvaise désagglomération des particules de chaux.

Les procédés et agents dispersants disponibles à ce jour ne permettent pas d'obtenir des suspensions aqueuses de chaux donnant totalement satisfaction notamment en termes de sédimentation et de propriétés rhéologiques.

Un objet de la présente invention est d'éviter le problème de la sédimentation lorsque les suspensions de chaux sont conservées sans agitation.

Un autre objet de la présente invention est de proposer des suspensions aqueuses de chaux les plus concentrées possible et qui présentent une rhéologie adaptée à leurs utilisations dans les procédés industriels.

Un objet de la présente invention est de proposer un procédé de préparation d'une suspension aqueuse de chaux éteinte qui puisse être mis en œuvre facilement.

De manière inattendue, les inventeurs ont mis en évidence qu'en soumettant une suspension aqueuse concentrée de chaux à une opération de cisaillement dans des conditions spécifiques en présence d'un polymère de structure particulière, il était possible d'obtenir des suspensions aqueuses concentrées et stables dans le temps.

Plus précisément, la présente invention a pour objet un procédé de préparation d'une suspension aqueuse d'hydroxyde de calcium comprenant une teneur sèche d'au moins 40 % en poids, ayant une teneur en particules d'hydroxyde de calcium comprise entre 40 à 60 % en poids, sur la base du poids total de la suspension aqueuse, la viscosité de ladite suspension aqueuse mesurée par un viscosimètre Brookfield DVIII à 10 rpm étant comprise entre 25 et 1 000 mPa.s à 20°C, comprenant les étapes consistant à :
a) on dispose d'un volume déterminé d'une solution aqueuse,
b) on dispose d'une quantité déterminée d'hydroxyde de calcium sous forme de poudre,
c) on dispose d'une quantité déterminée d'un copolymère constitué :
   - de monomères d'acide méthacrylique et/ou de l'un quelconque de ses sels,
   - éventuellement de monomères d'acide acrylique et/ou de l'un quelconque de ses sels,
   - de monomères de formule (I) :

   R-X-R' (I)

   selon laquelle :
   R représente une fonction insaturée polymérisable, notamment acrylate, méthacrylate, méthacryluréthane, vinyl ou allyl,
   R' désigne l'hydrogène ou un groupe alkyle ayant de 1 à 4 atomes de carbone,
   X représente une structure comportant n unité(s) d'oxyde d'éthylène OE et m unité(s) d'oxyde de propylène OP, disposées de manière aléatoire ou de manière régulière,
   m et n sont 2 entiers non nuls et compris entre 1 et 150,
d) on ajoute sous agitation à au moins une partie de ladite solution aqueuse au moins une partie de la quantité dudit copolymère,
e) on ajoute sous agitation à la solution aqueuse de l'étape d) au moins une partie de ladite quantité dudit hydroxyde de calcium,
f) on applique au mélange résultant de l'étape e) un cisaillement homogène de degré de cisaillement supérieur à 50 000 s⁻¹,
g) éventuellement, au cours de l'étape f), on ajoute la quantité résiduelle dudit copolymère et/ou dudit hydroxyde de calcium.

En effet, les inventeurs se sont rendu compte que pour que les suspensions aqueuses présentant les propriétés de stabilité dans le temps et concentration attendues, il était nécessaire :
- de disperser les particules d'hydroxyde de calcium en présence d'un copolymère hydrosoluble de type peigne présentant un squelette acide (méth)acrylique et de chaînes latérales poly(alkylèneglycol) de structure particulière,
- d'appliquer un cisaillement avec un degré supérieur à un seuil critique de cisaillement,
- d'utiliser un dispositif de cisaillement tel que l'ensemble de la suspension aqueuse soit soumis au seuil critique de cisaillement, et
- que ladite suspension aqueuse possède des concentrations en hydroxyde de calcium et copolymère telles à permettre lors du cisaillement, l'application d'une contrainte mécanique suffisante pour défloculer les particules d'hydroxyde de calcium.

Plus précisément, on applique à ladite suspension aqueuse un cisaillement homogène. On entend par «cisaillement homogène » un cisaillement qui a pour effet d'appliquer les mêmes contraintes mécaniques à toutes les parties de la suspension aqueuse ainsi traitée.

Certains dispositifs de cisaillement ont, en effet, une configuration telle qu'ils permettent en effet d'assurer que l'ensemble de la suspension aqueuse de chaux subit les contraintes mécaniques du cisaillement attendu.

La présente invention est basée sur la combinaison d'un procédé spécifique et d'un copolymère (méth)acrylique particulier.

De manière générale, il est à noter que dans le cadre de la présente invention, tous les modes de réalisation de l'invention peuvent être combinés.

Selon la présente invention, le terme « suspension » (« slurry » en anglais), ou alternativement de manière équivalente « dispersion », signifie une suspension aqueuse qui comprend des solides et au moins un additif.

Selon la présente invention, la suspension aqueuse possède une viscosité mesurée par un viscosimètre Brookfield DVIII à 10 rpm qui est comprise entre 25 et 1 000 mPa.s à 20°C.

Il faut noter qu'à des valeurs de viscosités supérieures à 1 000 mPa.s, les suspensions sont susceptibles de présenter des difficultés de manutention (par exemple, pompage et filtration de la suspension).

Par ailleurs, un objet de la présente invention est de maintenir la viscosité de la suspension, telle que mesurée par un viscosimètre Brookfield DVIII à 100 rpm après agitation, au-dessous de 1 000 mPa.s dans le temps, par exemple après un stockage de 7 jours, 20 jours ou 1 mois.

Par une « suspension aqueuse stable », on entend une suspension aqueuse dont la viscosité à 7 jours, 20 jours ou 1 mois, telle que mesurée par un viscosimètre Brookfield DVIII à 100 rpm après agitation, est inférieure à 1 000 mPa.s.

Par « solution aqueuse », on entend préférentiellement selon l'invention de l'eau. Cette solution peut éventuellement contenir d'autres liquides miscibles à l'eau ou des solides solubles dans l'eau.

Par « hydroxyde de calcium sous forme de poudre », on entend des particules de chaux éteinte. La chaux éteinte est une chaux constituée d'un ensemble de particules solides, principalement de dihydroxyde de calcium Ca(OH)₂ qui est le résultat de la réaction de particules de chaux vive avec de l'eau, réaction appelée hydratation ou extinction. La chaux éteinte s'appelle également chaux hydratée. De façon générale, la chaux éteinte peut contenir des impuretés, qui sont principalement issues de la chaux vive, par exemple magnésie, oxyde de magnésium, Al₂O₃, Fe₂O₃, MgO, S, SiO₂, Mn₃O₄, silicates etc. La chaux éteinte peut se présenter sous forme pulvérulente ou sous forme de suspension aqueuse, appelée lait de chaux.

Dans le cadre de la présente invention, on disperse de la chaux éteinte sous forme de poudre dans une solution aqueuse afin d'obtenir un lait de chaux concentré et stable dans le temps. On utilise par exemple comme matière minérale de départ une chaux éteinte sous forme de poudre commercialement disponible. On cite, à titre d'exemple, la chaux éteinte vendue sous la dénomination Supercalco® 97, Supercalco® 97/20, Sorbacal® SP, Standard Hydrated Lime, MicroCal® HF.

Le copolymère (méth)acrylique particulier selon l'invention est un copolymère hydrosoluble de type peigne présentant un squelette acide méthacrylique, et éventuellement acide acrylique, et de chaînes latérales poly(alkylèneglycol).

Par « poly(alkylène glycol) », on entend un polymère d'un alkylène glycol dérivé d'un oxyde oléfinique.

Les chaînes poly(alkylène glycol) du copolymère selon la présente invention renferment une proportion de groupes éthylène-oxy et une proportion de groupes propylène-oxy.

Les chaînes poly(alkylène glycol) selon la présente invention peuvent par exemple comprendre une proportion dominante de groupe éthylène-oxy en association avec une proportion secondaire de groupe propylène-oxy. Des exemples spécifiques de polymère alkylène glycol comprennent : les poly(alkylènes glycols) ayant un poids moléculaire moyen de 1 000, 4 000, 6 000, 10 000 et 20 000 g/mol ; les polyéthylène polypropylène glycols ayant un pourcentage d'oxyde d'éthylène compris entre 20 et 80 % en poids et un pourcentage d'oxyde de propylène compris entre 20 et 80 % en poids.

Il est à noter que les groupes éthylène-oxy et les groupes propylène-oxy des chaînes latérales du copolymère peuvent être disposés de manière aléatoire, de manière régulière ou en bloc.

Plus précisément, le polymère selon la présente invention est constitué :
- de monomères d'acide méthacrylique et/ou de l'un quelconque de ses sels,
- éventuellement de monomères d'acide acrylique et/ou de l'un quelconque de ses sels,
- de monomères de formule (I) :

R-X-R' (I)

selon laquelle :
R représente une fonction insaturée polymérisable, notamment acrylate, méthacrylate, méthacryluréthane, vinyl ou allyl,
R' désigne l'hydrogène ou un groupe alkyle ayant de 1 à 4 atomes de carbone,
X représente une structure comportant n unité(s) d'oxyde d'éthylène OE et m unité(s) d'oxyde de propylène OP, disposées de manière aléatoire ou de manière régulière,
m et n sont 2 entiers non nuls et compris entre 1 et 150.

Ainsi, le copolymère selon l'invention présente un squelette constitué de monomères acide méthacrylique, et éventuellement de monomères acide acrylique. Les inventeurs se sont en effet rendu compte que la présence de monomères d'acide méthacrylique dans le squelette du copolymère selon l'invention était indispensable pour résoudre le problème technique à l'origine de la présente invention.

Selon un mode de réalisation de l'invention, le copolymère présente un squelette constitué de monomères d'acide méthacrylique exclusivement.

Selon un autre mode de réalisation de l'invention, le copolymère présente un squelette constitué de monomères d'acide méthacrylique et de monomères d'acide acrylique.

Ainsi, il est exclu dans le cadre de la présente invention d'utiliser un copolymère présentant un squelette constitué exclusivement de monomères d'acide acrylique.

Les inventeurs ont en outre constaté que l'utilisation dans la cadre de la présente invention du copolymère de type peigne commercialisé sous le nom Ethacryl® G (dispersant polycarboxylate de la société Coatex qui ne contient pas de monomères d'acide méthacrylique) ne convient pas pour résoudre le problème technique à l'origine de la présente invention.

Ledit copolymère est obtenu par les procédés connus de copolymérisation radicalaire conventionnelle en solution, en vrac, en bulk, en émulsion directe ou inversée, en suspension ou par précipitation dans des solvants appropriés, en présence de systèmes catalytiques et d'agents de transfert connus, ou encore, par des procédés de polymérisation radicalaire contrôlés tels que le procédé connu sous le nom de transfert de chaînes par addition-fragmentation réversible (RAFT), le procédé connu sous le nom de polymérisation radicalaire par transfert d'atomes (ATRP), le procédé connu sous le nom de polymérisation médiée par des nitroxydes (NMP), ou encore, le procédé connu sous le nom de polymérisation radicalaire médiée par des cobaloximes.

Il est obtenu sous une forme acide et éventuellement distillée. Il peut également être partiellement ou totalement neutralisé par un ou plusieurs agents de neutralisation choisis parmi les hydroxydes de sodium, de calcium, de magnésium et de potassium et leurs mélanges ou choisis parmi les amines.

Selon un mode de réalisation de la présente invention, ledit copolymère est 100 % neutralisé avec de l'hydroxyde de sodium.

Selon un autre mode de réalisation de la présente invention, ledit copolymère est partiellement neutralisé avec de l'hydroxyde de sodium.

Selon les étapes a), b) et c) du procédé selon l'invention, on dispose respectivement d'un volume déterminé d'une solution aqueuse, d'une quantité déterminée d'hydroxyde de calcium sous forme de poudre et d'une quantité déterminée d'un copolymère tel que décrit ci-dessus.

Selon l'étape d) du procédé, on ajoute sous agitation à au moins une partie de ladite solution aqueuse au moins une partie de la quantité dudit copolymère.

Dans la présente description, de manière générale, par une « partie », on entend une proportion de la quantité totale nécessaire, ou alternativement, une proportion du volume total nécessaire.

A titre indicatif, une partie de la solution aqueuse peut correspondre par exemple à 40 % de la quantité d'eau totale nécessaire à la dilution finale.

A l'issue de l'étape d) du procédé, on obtient une solution aqueuse totale ou une solution aqueuse primaire.

Par « solution aqueuse totale », on entend que la totalité de la solution aqueuse est soumise aux étapes suivantes du procédé.

Par « solution aqueuse primaire », on entend que, dans un premier temps, une partie seulement de la solution aqueuse est soumise au cisaillement, le reste de la solution aqueuse étant mis en œuvre au cours du cisaillement et/ou en phase terminale de celui-ci.

Selon un mode de réalisation, l'étape d) du procédé consiste à ajouter sous agitation à la totalité de ladite solution aqueuse (solution aqueuse totale) au moins une partie de la quantité dudit copolymère.

Selon un autre mode de réalisation, l'étape d) du procédé consiste à ajouter sous agitation à la totalité de ladite solution aqueuse (solution aqueuse totale) la totalité de la quantité dudit copolymère.

Selon un autre mode de réalisation encore, l'étape d) du procédé consiste à ajouter sous agitation à une partie du volume total de ladite solution aqueuse (solution aqueuse primaire) une partie de la quantité totale nécessaire dudit copolymère.

Selon un autre mode de réalisation encore, l'étape d) du procédé consiste à ajouter sous agitation à une partie du volume total de ladite solution aqueuse (solution aqueuse primaire) la totalité de la quantité nécessaire dudit copolymère.

Selon l'étape e) du procédé, on ajoute sous agitation à la solution aqueuse de l'étape d) au moins une partie de ladite quantité dudit hydroxyde de calcium.

Ainsi, la quantité totale de chaux éteinte peut être ajoutée en une seule fois, ou au contraire par incréments.

La chaux éteinte peut également être introduite dans la solution aqueuse de manière continue, c'est-à-dire à vitesse constante ou variable, mais sans arrêt de l'introduction.

Selon un mode de réalisation, on ajoute sous agitation à la solution aqueuse de l'étape d) la totalité de ladite quantité dudit hydroxyde de calcium.

Selon un mode de réalisation, on ajoute sous agitation à la solution aqueuse de l'étape d) une partie de ladite quantité totale nécessaire dudit hydroxyde de calcium. Ce mode de réalisation présente l'avantage de permettre d'augmenter le débit de l'appareil en séparant l'ajout de la chaux en deux étapes : prédispersion puis dispersion finale lors du cisaillement.

Selon l'étape f) du procédé de l'invention, on applique au mélange résultant de l'étape e) un cisaillement homogène de degré de cisaillement supérieur à 50 000 s⁻¹.

Les inventeurs démontrent en effet qu'il existe un seuil de cisaillement homogène critique nécessaire pour atteindre les objectifs de la présente invention, à savoir teneur de la suspension en chaux éteinte élevée, absence de sédimentation et stabilité de la suspension dans le temps. Appliquer un tel degré de cisaillement aux suspensions de chaux éteinte permet, en combinaison avec l'utilisation d'un copolymère hydrosoluble de structure chimique particulière, d'atteindre ces objectifs.

On optimise ainsi significativement les propriétés rhéologiques de la dispersion résultante dans le temps.

Selon un mode de réalisation, on applique au mélange résultant de l'étape e) un cisaillement homogène de degré de cisaillement supérieur à 60 000 s⁻¹, notamment supérieur à 70 000 s⁻¹.

Selon le procédé de la présente invention, on applique à ladite suspension aqueuse un cisaillement homogène, qui a pour effet d'appliquer les mêmes contraintes mécaniques minimales pour toutes les parties de la suspension aqueuse ainsi traitée.

Le cisaillement homogène requis selon la présente invention, peut être obtenu selon plusieurs variantes.

Selon une première variante, on peut envisager de soumettre le mélange résultant de l'étape e) à un taux de cisaillement constant.

Cependant, l'invention n'est pas limitée à ce mode de réalisation particulier.

Par exemple, le taux de cisaillement peut être distinct, à un temps donné, pour deux points de la suspension. C'est ainsi qu'en variant la géométrie du dispositif utilisé pour générer les forces de cisaillement, il est possible de moduler le taux de cisaillement appliqué à ladite dispersion dans le temps et/ou dans l'espace.

La dispersion étant fluide lorsqu'elle est soumise au cisaillement, chaque partie de celle-ci peut être ainsi soumise à un taux de cisaillement qui varie dans le temps. Le cisaillement est dit homogène lorsque quelle que soit la variation dans le temps du taux de cisaillement, celui-ci passe par une valeur minimale qui est la même pour toutes les parties de la dispersion, à un instant donné qui peut différer d'un endroit à l'autre de la dispersion.

Dans le cadre de la présente invention, on introduit la suspension aqueuse totale ou la suspension aqueuse primaire dans un dispositif approprié de façon à générer un cisaillement homogène.

Ce dispositif peut présenter des configurations variées. La configuration exacte n'est pas essentielle selon l'invention dès lors qu'en sortie de ce dispositif l'ensemble de la dispersion a été soumis au même cisaillement minimal.

A titre illustratif mais non limitatif des dispositifs pouvant être mis en œuvre selon l'invention, pour appliquer un cisaillement homogène, on peut notamment citer le mélangeur IKA® Magic Lab et le Dispax Reactor® DR2000.

Selon un mode de réalisation de la présente invention, on utilise un mélangeur du type rotor-stator pour réaliser l'étape f).

Selon un autre mode de réalisation, on utilise pour réaliser l'étape f) du procédé selon l'invention un mélangeur constitué de plusieurs couples rotor-stator en série directe.

Selon un mode de réalisation de la présente invention, on utilise pour réaliser l'étape f) un mélangeur constitué de pièces cylindriques qui présentent une vitesse tangentielle supérieure à 40 m/sec.

Un mélangeur du type rotor-stator est généralement constitué de deux disques concentriques délimitant une enceinte dans laquelle circule la dispersion primaire. L'un des disques est immobile (stator) et l'autre animé d'un mouvement uniforme de rotation autour de son axe (rotor). Un tel dispositif comprend une conduite d'alimentation en produit (en l'espèce suspension de chaux) lequel traverse le disque supérieur pour déboucher dans la partie centrale de l'enceinte. La suspension passe par l'entrefer constitué entre le stator et le rotor. Le rotor (pièce du dispositif entraîné par un moteur) et le stator (pièce fixe) sont respectivement constitués, sur leur couronne extérieure, de fentes qui permettent la circulation de la suspension de chaux à cisailler. Un tel dispositif comprend également une conduite de sortie reliée à un réservoir destiné à recevoir la suspension ainsi cisaillée.

Le dispositif de cisaillement peut comprendre une boucle de recirculation qui permet de multiplier les passages dans le dispositif de cisaillement.

Ainsi, selon un mode de réalisation, le dispositif utilisé pour réaliser l'étape f) est équipé d'une boucle de recirculation.

Selon un mode de réalisation, on utilise pour réaliser l'étape f) un dispositif configuré pour délivrer une puissance utile d'au moins 1 000 W/m³.

Selon l'étape g) optionnelle du procédé selon l'invention, on ajoute la quantité résiduelle dudit copolymère et/ou dudit hydroxyde de calcium.

Ladite quantité résiduelle de copolymère et/ou ladite quantité résiduelle dudit hydroxyde de calcium peut être ajoutée sous forme d'une dilution ou suspension réalisée avec la partie résiduelle de ladite solution aqueuse (ou au moins une partie de celle-ci).

Cet ajout peut par exemple être réalisé au cours de l'étape f), c'est-à-dire pendant l'étape de cisaillement. Ledit ajout peut être réalisé en continu pendant toute la durée de l'étape f), pendant une partie de celle-ci seulement ou en une seule fois, par exemple au début de l'étape de cisaillement, au cours de celle-ci ou en phase terminale de celle-ci.

Selon un mode de réalisation de la présente invention, le procédé de l'invention ne comporte pas d'étape consistant en l'ajout d'un hydroxyde de métal alcalin dans la solution ou suspension aqueuse. Il est envisageable de disposer d'un copolymère selon l'invention partiellement ou totalement neutralisé au moyen d'un hydroxyde de métal alcalin. Néanmoins, selon ce mode de réalisation, il est exclu d'ajouter un hydroxyde de métal alcalin en tant que tel, dans la solution aqueuse ou dans la suspension aqueuse de chaux.

Selon un mode de réalisation de la présente invention, le procédé de préparation d'une suspension aqueuse d'hydroxyde de calcium comprenant une teneur sèche d'au moins 40 % en poids, ayant une teneur en particules d'hydroxyde de calcium comprise entre 40 à 60 % en poids, sur la base du poids total de la suspension aqueuse, la viscosité de ladite suspension aqueuse mesurée par un viscosimètre Brookfield DVIII à 10 rpm étant comprise entre 25 et 1 000 mPa.s à 20°C, comprend les étapes consistant à :
a) on dispose d'un volume déterminé d'une solution aqueuse,
b) on dispose d'une quantité déterminée d'hydroxyde de calcium sous forme de poudre,
c) on dispose d'une quantité déterminée d'un copolymère constitué :
   - de monomères d'acide méthacrylique et/ou de l'un quelconque de ses sels,
   - éventuellement de monomères d'acide acrylique et/ou de l'un quelconque de ses sels,
   - de monomères de formule (I) :

   R-X-R' (I)

   selon laquelle :
   R représente une fonction insaturée polymérisable, notamment acrylate, méthacrylate, méthacryluréthane, vinyl ou allyl,
   R' désigne l'hydrogène ou un groupe alkyle ayant de 1 à 4 atomes de carbone,
   X représente une structure comportant n unité(s) d'oxyde d'éthylène OE et m unité(s) d'oxyde de propylène OP, disposées de manière aléatoire ou de manière régulière,
   m et n sont 2 entiers non nuls et compris entre 1 et 150,
d) on ajoute sous agitation à ladite solution aqueuse la totalité de la quantité dudit copolymère,
e) on ajoute sous agitation à la solution aqueuse de l'étape d) la totalité de ladite quantité dudit hydroxyde de calcium, et
f) on applique au mélange résultant de l'étape e) un cisaillement homogène de degré de cisaillement supérieure à 50 000 s⁻¹.

Toutes les étapes du procédé de l'invention peuvent être réalisées à température ambiante, c'est-à-dire à environ 20°C ou à des températures inférieures, par exemple 10°C. Un chauffage peut être introduit par une source externe. L'introduction de la chaux éteinte et/ou le cisaillement de l'étape e) sont susceptibles d'engendrer une augmentation plus ou moins importante de la température de la suspension.

On peut prévoir si nécessaire un dispositif visant à refroidir la température de la suspension.

Selon un mode de réalisation, ladite quantité déterminée de copolymère varie entre 0,01 et 10 % en poids, sur la base du poids total de particules d'hydroxyde de calcium dans la suspension.

Selon un autre mode de réalisation, ladite quantité déterminée de copolymère varie entre 0,05 et 5 % en poids, sur la base du poids total de particules d'hydroxyde de calcium dans la suspension.

Selon un autre mode de réalisation encore, ladite quantité déterminée de copolymère varie entre 0,1 et 3,0 % en poids, sur la base du poids total de particules d'hydroxyde de calcium dans la suspension.

Selon un autre mode de réalisation, ladite quantité déterminée de copolymère varie entre 0,2 et 2,0 % en poids, sur la base du poids total de particules d'hydroxyde de calcium dans la suspension.

Selon un autre mode de réalisation, la suspension aqueuse selon la présente invention se compose d'eau, de particules d'hydroxyde de calcium et d'un copolymère selon la présente invention. Selon ce mode de réalisation, la suspension aqueuse ne comprend aucun additif autre que le copolymère décrit dans la présente demande, c'est-à-dire qu'elle ne comprend pas, par exemple, un autre polymère ou dispersant.

La suspension aqueuse selon la présente invention a une teneur en particules d'hydroxyde de calcium comprise entre 40 à 60 % en poids, sur la base du poids total de la suspension aqueuse. Selon un mode de réalisation, la suspension aqueuse selon la présente invention a une teneur en particules d'hydroxyde de calcium comprise entre 45 à 55 % en poids, sur la base du poids total de la suspension aqueuse.

Selon un mode de réalisation de la présente invention, ledit copolymère présente une masse moléculaire comprise entre 30 000 et 200 000 g/mol telle que déterminée par chromatographie d'exclusion stérique (CES).

Selon un autre mode de réalisation de la présente invention, le copolymère présente une masse moléculaire comprise entre 30 000 et 160 000 g/mol telle que déterminée par chromatographie d'exclusion stérique (CES).

Selon un mode de réalisation de la présente invention, dans ledit copolymère hydrosoluble, ledit monomère de formule (I) est tel que n et m sont deux entiers non nuls et n+m > 17.

Selon un mode de réalisation de la présente invention, dans ledit copolymère hydrosoluble, la fonction R dudit monomère de formule (I) représente la fonction méthacrylate.

Selon un mode de réalisation de la présente invention, dans ledit copolymère, la fonction R' dudit monomère de formule (I) représente H ou CH₃.

Selon un mode de réalisation de la présente invention, dans ledit copolymère, ledit monomère de formule (I) est constitué de, exprimé en pourcentage en poids de chacun de ses constituants :
- 5 à 30 % en poids de monomères d'acide méthacrylique et/ou de l'un quelconque de ses sels,
- 0 à 10 % en poids de monomères d'acide acrylique et/ou de l'un quelconque de ses sels,
- 70 à 95 % en poids de monomères de formule (I).

Selon un mode de réalisation de la présente invention, dans ledit copolymère, ledit monomère de formule (I) est constitué de, exprimé en pourcentage en poids de chacun de ses constituants :
- 7 à 22 % en poids de monomères d'acide méthacrylique et/ou de l'un quelconque de ses sels,
- 0 à 5 % en poids de monomères d'acide acrylique et/ou de l'un quelconque de ses sels,
- 78 à 93 % en poids de monomères de formule (I).

La présente invention concerne également une suspension aqueuse d'hydroxyde de calcium comprenant une teneur sèche d'au moins 40 % en poids, ayant une teneur en particules d'hydroxyde de calcium comprise entre 40 à 60 % en poids, sur la base du poids total de la suspension aqueuse, la viscosité de ladite suspension aqueuse mesurée par un viscosimètre Brookfield DVIII à 10 rpm étant comprise entre 25 et 1 000 mPa.s à 20°C, ladite suspension étant susceptible d'être obtenue par le procédé de la présente invention.

La présente invention concerne également l'utilisation de la suspension aqueuse de chaux éteinte selon l'invention dans les applications qui suivent.

Les suspensions peuvent être utilisées dans le traitement des fumées d'usine de production d'énergie utilisant des combustibles (notamment du charbon) contenant par exemple du soufre et d'autres impuretés qui génèrent des molécules acides (dioxyde de soufre, trioxyde de soufre, acide sulfurique, acide chlorhydrique, acide fluorhydrique...) ou polluantes (mercure, métaux lourds...).

Elles peuvent également être utilisées dans les usines d'incinération d'ordure ménagères ou industrielles qui génèrent le même type de polluants avec en plus des dioxines.

L'utilisation de chaux en suspension aqueuse concentrée, pulvérisée dans les fumées permet de piéger les polluants qui sont ensuite éliminés dans les résidus solides produits par la réaction avec la chaux et le séchage partiel ou total de ces produits de réaction.

Les suspensions peuvent être utilisées comme agents neutralisants de produits de réaction acides, permettant leur élimination sous forme solide et/ou neutralisée ou leur utilisation sous forme de sel de calcium (comme par exemple des sulfonates et phénates neutralisés comme additifs des produits lubrifiants). De manière non exhaustive, on peut citer la neutralisation des boues acides provenant de la fabrication du dioxyde de titane, la neutralisation des solutions acides produites lors des procédés de fabrication de produits chimiques.

Les suspensions aqueuses de la présente invention peuvent être utilisées comme agents neutralisants des effluents de mine, dans le but de neutraliser l'acidité et/ou séparer les métaux lourds en solution avant le rejet des fluides dans le milieu naturel ou en lagune.

Les suspensions peuvent être utilisées dans les procédés de décarbonatation de l'eau, procédé permettant de réduire la dureté temporaire de l'eau (élimination partielle ou totale des hydrogénocarbonates des métaux alcalino-terreux). Les eaux ainsi traitées sont destinées à être utilisées comme eaux potables ou eau industrielles, éventuellement après un réajustement du pH au moyen de dioxyde de carbone ou de tout autre acide convenant à l'application finale.

Les traitements de purification des eaux potables, usées ou industrielles engendrent des résidus appelés boues. Ces boues sont d'abord séparées de l'eau purifiée puis traitées afin de les stabiliser et de les concentrer. Le procédé de traitement de ces boues est appelé généralement le conditionnement et fait appel à des additifs organiques et/ou minéraux.

La présente invention concerne également l'utilisation de la suspension aqueuse de chaux éteinte selon l'invention pour le conditionnement des boues, issues des usines de traitement d'eau usée. La chaux en suspension est utilisée dans un premier temps pour favoriser la floculation des boues et dans un second temps pour la stérilisation par le pH des dites boues par maintien de ces dernières à un pH de 12 ou plus pendant 24 à 72 heures ou plus.

Les suspensions peuvent être utilisées dans le traitement des granulats utilisés lors du procédé de production d'enrobés bitumineux. L'adhésion des émulsions de bitumes sur les granulats est grandement améliorée lorsque ces granulats sont au préalable traités par la chaux. Cette meilleure adhérence conduit à des revêtements bitumineux plus résistants à l'usure, à la déformation et ayant une intégrité physique prolongée.

Les suspensions aqueuses de la présente invention peuvent être utilisées dans la production des matériaux de construction du type béton cellulaire. La chaux est mélangée à du ciment, du sable et de la poudre d'aluminium. Le pH élevé du mélange provoque un dégagement gazeux d'hydrogène par attaque de l'aluminium et la pâte aérée ainsi produite est moulée puis autoclavée pour produire des pièces en béton cellulaire.

Les suspensions aqueuses de la présente invention peuvent être utilisées dans le traitement des sols contaminés dans le but de neutraliser l'acidité de ces sols, d'immobiliser les polluants par neutralisation ou floculation et éviter ainsi l'entraînement desdits polluants dans les eaux souterraines.

Les suspensions aqueuses de la présente invention peuvent être utilisées dans le traitement des sols en agriculture afin de corriger le pH des ces sols, amender lesdits sols en apportant une source de calcium ou de calcium et magnésium dans le cas des chaux dolomitiques et rendre ces sols moins imperméables par floculation des argiles qu'ils contiennent.

Les suspensions aqueuses de la présente invention peuvent être utilisées dans le traitement des eaux de surfaces, lacs, étangs et rivières dans le but d'ajuster le pH de l'eau pour réduire l'impact de l'acidification de ces dites eaux, acidification d'origine pluviale ou animale dans le cas des élevages piscicoles.

Les suspensions aqueuses de la présente invention peuvent être utilisées dans la production d'aliments pour le bétail ou les volailles et entre autre comme source de calcium ou calcium et magnésium.

Les suspensions aqueuses de la présente invention peuvent être utilisées dans l'industrie du papier, par exemple comme constituant de la pâte à papier.

Elles peuvent encore être utilisées pour le raffinage du sucre.

Elles peuvent aussi être utilisées pour la production de carbonate de calcium précipité (PCC).

La présente invention concerne également l'utilisation de la suspension aqueuse de chaux éteinte selon l'invention pour le traitement des fumées industrielles, notamment pour la désulfurisation des fumées, ou pour le traitement des eaux usées domestiques, notamment potables, ou industrielles.

La présente invention concerne également un procédé de traitement des gaz ou des fumées comprenant une étape consistant à injecter/pulvériser une suspension aqueuse de chaux éteinte selon l'invention dans les gaz ou fumées à traiter de manière à en éliminer les composés acides, les oxydes de soufre, l'acide chlorhydrique... etc.

### Exemples

Dans l'ensemble des essais qui suivent, les suspensions sont évaluées au moyen des paramètres décrits ci-dessous.

La viscosité (exprimée en mPa.s) de chaque suspension est mesurée à 20°C avec un viscosimètre de type Brookfield DVIII. Les valeurs de viscosités indiquées sont mesurées avant agitation ou après agitation, à une vitesse de 10 rpm et 100 rpm, et à différents temps de stockage. Les valeurs de viscosité après 1 mois de stockage et après agitation de la suspension (au moyen d'un équipement du type Rayneri par exemple) sont tout particulièrement pertinentes en vue d'évaluer les caractéristiques de l'invention (influence du polymère, influence de l'équipement, influence du degré minimum de cisaillement) au regard de l'utilisation des suspensions dans les procédés industriels.

La sédimentation de chaque suspension est évaluée par une mesure de la hauteur du dépôt dans le récipient. Les valeurs de sédimentation sont exprimées en %, c'est-à-dire comme le rapport d'une hauteur de dépôt sur la hauteur totale de la suspension dans le récipient, multiplié par 100.

### EXEMPLE 1

Cet exemple illustre l'utilisation de différents polymères (art antérieur, invention, hors invention) dans un procédé de préparation d'une suspension aqueuse d'hydroxyde de calcium (chaux éteinte) selon l'invention.

Plusieurs suspensions aqueuses d'hydroxyde de calcium, ayant chacune une teneur en solides de 48 ± 1 %, sont préparées dans cet exemple. On introduit dans un récipient 503 g d'eau, ainsi qu'une quantité d'un polymère correspondant à 1,41 % en poids sec (sur la base du poids total des solides dans la suspension), ledit polymère étant un polymère de l'art antérieur ou un polymère de la présente invention. Ensuite, 485 g de chaux éteinte (Supercalco® 97, Carmeuse) sont introduits sous agitation dans le récipient.

Un mélangeur de type IKA® Magic Lab réglé de manière à produire un cisaillement de 82 000 s⁻¹ est ensuite alimenté par le mélange obtenu à l'étape précédente. Une boucle de recirculation permet plusieurs passages dans l'entrefer constitué par le rotor et le stator du mélangeur IKA.

Une fois cisaillé, la suspension est stockée en vue d'une évaluation de ces paramètres de viscosités, sédimentation et stabilité à 1 mois.

Les polymères utilisés dans l'exemple 1 ont les caractéristiques suivantes :

### Essai 1-1 :

Cet essai illustre l'utilisation, dans un procédé selon l'invention, d'un homopolymère hors invention, disponible dans le commerce sous le nom de Rheosperse® 3010, Coatex, France et constitué de monomères d'acide acrylique, 100 % neutralisé avec de l'hydroxyde de sodium (poids moléculaire : 4 000 g/mol).

### Essai 1-2 :

Cet essai illustre l'utilisation, dans un procédé selon l'invention, d'un copolymère hors invention, disponible dans le commerce et constitué de monomères d'acide acrylique et de macromonomères de structure vinyl-PEG₂₀₀₀, c'est-à-dire des monomères comportant 46 unités d'oxyde d'éthylène.

Ainsi ce polymère de structure peigne ne comporte pas, d'une part de monomères d'acide méthacrylique et, d'autre part, d'unités d'oxyde de propylène sur ses macromonomères.

### Essai 1-3 :

Cet essai illustre l'utilisation, dans un procédé selon l'invention, d'un copolymère hors invention, disponible dans le commerce et constitué de 15 % en poids de monomères acide acrylique et de monomères acide méthacrylique, ainsi que de 85 % en poids de macromonomères de MPEG₅₀₀₀ (c'est-à-dire des unités méthoxy(OE)₁₁₃).

Ainsi ce polymère de structure peigne ne comporte pas d'unités d'oxyde de propylène sur ses macromonomères.

### Essais 1-4 à 1-8 : copolymères de structure particulière, selon l'invention ou hors invention.

Ces essais illustrent l'utilisation de copolymères hydrosolubles, selon l'invention ou hors invention, ayant :
- un squelette chargé négativement se composant de monomères d'acide acrylique et/ou d'acide méthacrylique polymérisés de manière aléatoire, et
- des chaînes latérales non chargées se composant d'unités poly(alkylène glycol).

### * Essai 1-4 : hors invention

Le copolymère a la composition suivante (en % en poids par rapport au poids total du copolymère) :
- 12,8 % de monomères d'acide acrylique,
- 87,2 % de monomères de formule (I) : R - X - R' dans laquelle R représente une fonction méthacrylate, R' désigne l'hydrogène, X représente une structure comportant 46 unités d'oxyde d'éthylène OE et 15 unités d'oxyde de propylène OP, disposées de manière aléatoire.
   Masse moléculaire : 38 000 - 52 000 g/mol.
   Neutralisation partielle NaOH ; pH : 3-4,5.

Ce copolymère ne comportant pas de monomères d'acide méthacrylique est un copolymère hors invention.

### * Essai 1-5 : selon l'invention

Le copolymère a la composition suivante (en % en poids par rapport au poids total du copolymère) :
- 7,44 % de monomères d'acide méthacrylique,
- 92,56 % de monomères de formule (I) : R - X - R' dans laquelle R représente une fonction méthacrylate, R' désigne l'hydrogène, X représente une structure comportant 46 unités d'oxyde d'éthylène OE et 15 unités d'oxyde de propylène OP, disposées de manière aléatoire.
   Masse moléculaire : 110 000 - 150 000 g/mol.
   Neutralisation partielle au NaOH ; pH : 3-4,5.

### * Essai 1-6 : selon l'invention

Le copolymère a la composition suivante (en % en poids par rapport au poids total du copolymère) :
- 19,8 % de monomères d'acide méthacrylique,
- 3 % de monomères d'acide acrylique, et
- 77,2 % de monomères de formule (I) : R - X - R' dans laquelle R représente une fonction méthacrylate, R' désigne l'hydrogène, X représente une structure comportant 46 unités d'oxyde d'éthylène OE et 15 unités d'oxyde de propylène OP, disposées de manière aléatoire.
   Masse moléculaire : 34 000 - 44 000 g/mol.
   Neutralisation totale NaOH ; pH : 7,7.

### * Essai 1-7 : selon l'invention

Le copolymère a la composition suivante (en % en poids par rapport au poids total du copolymère) :
- 12,5 % de monomères d'acide méthacrylique,
- 87,5 % de monomères de formule (I) : R - X - R' dans laquelle R représente une fonction méthacrylate, R' désigne l'hydrogène, X représente une structure comportant 46 unités d'oxyde d'éthylène OE et 15 unités d'oxyde de propylène OP, disposées de manière aléatoire.
   Masse moléculaire : 60 000 - 95 000 g/mol.
   Neutralisation totale NaOH ; pH : 6,7-7,7.

### * Essai 1-8 : hors invention

Le copolymère a la composition suivante (en % en poids par rapport au poids total du copolymère) :
- 24 % de monomères d'acide méthacrylique,
- 4,3 % de monomères d'acide acrylique, et
- 71,7 % de monomères de formule (I) : R - X - R' dans laquelle R représente une fonction méthacrylate, R' désigne H, X représente une structure comportant 46 unités d'oxyde d'éthylène OE.
   Neutralisation : 100 % NaOH.
   Masse moléculaire : 17 900 g/mol.

Ce copolymère dont les monomères de formule (I) ne comporte pas d'unités d'oxyde de propylène, est un copolymère hors invention.

Les résultats de sédimentation et de différentes mesures de viscosité et sont présentés dans le tableau 1 ci-dessous :

**Tableau 1**

| **Essais** | | **sédimentation T0** | **viscosité apag T0 10 rpm** | **viscosité apag T0 100 rpm** | **viscosité avag T0+1m 10 rpm** | **viscosité avag T0+1m 100 rpm** | **viscosité apag T0+1m 10 rpm** | **viscosité apag T0+1m 100 rpm** |
|---|---|---|---|---|---|---|---|---|
| **1-1** | AANT | 15 % | 10 | 58 | 1000 | 124 | 2770 | 382 |
| **1-2** | AANT | 0 | 9840 | 1140 | 21000 | 4550 | 11020 | 1146 |
| **1-3** | AANT | 0 | 1940 | 386 | 17800 | 3820 | 7220 | 1000 |
| **1-4** | HINV | 0 | 290 | 170 | 19000 | 3310 | 16460 | 1900 |
| **1-5** | INV | 0 | 300 | 159 | 4620 | 890 | 590 | 230 |
| **1-6** | INV | 0 | 250 | 152 | 1320 | 478 | 730 | 234 |
| **1-7** | INV | 0 | 170 | 114 | 1260 | 462 | 330 | 170 |
| **1-8** | HINV | 30 % | 30 | 40 | 1900 | 802 | 470 | 202 |

| | | | | | | | | |
|---|---|---|---|---|---|---|---|---|
| AANT : art antérieur HINV : hors invention INV : invention Apag : après agitation Avag : avant agitation | | | | | | | | |

On constate tout d'abord que les polymères des essais 1-1 (homopolymères d'acide acrylique) et 1-8 (copolymères ne comportant pas d'oxyde de propylène dans ses chaines latérales) ne permettent pas d'éviter la sédimentation. L'utilisation de ces polymères ne permet donc pas de résoudre le problème technique à l'origine de la présente invention.

La mesure de la viscosité 10 rpm après agitation et à T0 montre que les polymères des essais 1-2 et 1-3 ne permettent pas d'obtenir des suspensions de chaux éteinte présentant des caractéristiques rhéologiques permettant leurs utilisations dans des procédés industriels, notamment des caractéristiques rhéologiques propres au pompage des suspensions. La suspension obtenue à l'essai 1-2 au moyen d'un polymère de l'art antérieur présente en effet une viscosité de 9 840 mPa.s à T0 après agitation. La suspension obtenue à l'essai 1-3 au moyen d'un autre polymère de l'art antérieur présente quant à lui une viscosité de 1 940 mPa.s à T0 après agitation. Ces valeurs, en dehors de la gamme de viscosités revendiquées (entre 25 et 1 000 mPa.s à 20°C) sont incompatibles avec l'utilisation des suspensions escomptée.

La mesure de la viscosité 10 rpm après agitation à T0 + 1 mois montre que le polymère de l'essai 1-4 ne permet pas d'obtenir une suspension concentrée de chaux qui présente une viscosité adaptée. En effet, cette viscosité s'élève à 16 460 s⁻¹.

Les profils rhéologiques des suspensions de chaux des essais 1-5, 1-6 et 1-7 (utilisation d'un copolymère selon l'invention) sont en adéquation avec l'utilisation de suspensions dans des procédés industriels.

### EXEMPLE 2

Cet exemple illustre l'utilisation d'équipements de cisaillement, identiques ou différents, éventuellement réglés à différents degrés de cisaillement pour préparer une suspension aqueuse d'hydroxyde de calcium (chaux éteinte) contenant un copolymère selon l'invention.

Une première série de trois suspensions aqueuses d'hydroxyde de calcium (essais 2-1 à 2-3), ayant chacune une teneur en solides de 48 ± 1 %, sont préparées par introduction dans un récipient de 503 g d'eau, et d'une quantité d'un polymère qui correspond à 1,41 % en poids sec (sur la base du poids total des solides dans la suspension). Ledit polymère est celui de l'essai 1-5. Ensuite, 485 g de chaux éteinte (Supercalco® 97, Carmeuse) sont introduits sous agitation dans le récipient.

Une deuxième série de trois suspensions aqueuses d'hydroxyde de calcium (essais 2-4 à 2-6), ayant chacune une teneur en solides de 48 ± 1 %, sont préparées par introduction dans un récipient de 503 g d'eau et d'une quantité correspondant à 1,41 % en poids sec d'un polymère (sur la base du poids total des solides dans la suspension), ledit polymère étant celui de l'essai 1-6. Ensuite, 485 g de chaux éteinte (Supercalco® 97, Carmeuse) sont introduits sous agitation dans le récipient.

### Essais 2-1 et 2-4

Un mélangeur de type Ultraturax® (type rotor-stator) réglé de manière à produire un cisaillement d'environ 40 000 s⁻¹ et qui procure un cisaillement homogène selon la définition de la présente invention est alimenté par le mélange obtenu à l'étape précédente.

Une boucle de recirculation permet plusieurs passages dans le mélangeur. Le temps de recirculation est fixé à 15 minutes.

### Essais 2-2 et 2-5

Un mélangeur de type Rayneri® réglé de manière à produire un cisaillement d'environ 3 000 s⁻¹ (qui ne procure pas un cisaillement homogène selon la définition de la présente invention) est alimenté par le mélange obtenu à l'étape précédente.

Une boucle de recirculation permet plusieurs passages dans le mélangeur. Le temps de recirculation est fixé à 15 minutes.

### Essais 2-3 et 2-6

Un mélangeur de type IKA® Magic Lab réglé de manière à produire un cisaillement de 82 000 s⁻¹ et qui procure un cisaillement homogène selon la définition de la présente invention est ensuite alimenté par le mélange obtenu à l'étape précédente.

Une boucle de recirculation permet plusieurs passages dans l'entrefer constitué par le rotor et le stator du mélangeur IKA. Le temps de recirculation est fixé à 15 minutes.

Une fois cisaillées, les suspensions sont stockées en vue d'une évaluation des paramètres de viscosités, sédimentation et stabilité à 1 mois.

Les résultats de sédimentation et de différentes mesures de viscosité et sont présentés dans le tableau 2 ci-dessous :

**Tableau 2**

| **Essais** | | **sédimen - tation T0** | **viscosité apag T0 10 rpm** | **viscosité apag T0 100 rpm** | **viscosité avag T0+1m 10 rpm** | **viscosité avag T0+1m 100 rpm** | **viscosité apag T0+1m 10 rpm** | **viscosité apag T0+1m 100 rpm** |
|---|---|---|---|---|---|---|---|---|
| **2-1** | HINV | 30 % | 70 | 107 | 3300 | 560 | 430 | 168 |
| **2-2** | HINV | 20% | 50 | 98 | 2400 | 236 | 790 | 220 |
| **2-3** | INV | 0 | 300 | 159 | 4620 | 890 | 590 | 230 |
| **2-4** | HINV | 30 % | 650 | 162 | 1600 | 580 | 1890 | 380 |
| **2-5** | HINV | 30 % | 260 | 107 | 19300 | 1800 | 1000 | 240 |
| **2-6** | INV | 0 | 250 | 152 | 1320 | 478 | 730 | 234 |

| | | | | | | | | |
|---|---|---|---|---|---|---|---|---|
| HINV : hors invention INV : invention Apag : après agitation Avag : avant agitation | | | | | | | | |

On constate tout d'abord que le degré de cisaillement mis en œuvre dans les essais 2-1 et 2-4 (Ultraturax réglé à 40 000 s⁻¹) et des essais 2-2 et 2-5 (mélangeur 3000 s⁻¹) ne permet pas d'éviter la sédimentation.

Par contre, le degré de cisaillement des essais 2-3 et 2-6 (IKA réglé à 82 000 s⁻¹), combiné à l'utilisation d'un polymère de structure particulière, permet non seulement d'éviter le problème de la sédimentation, mais en outre d'obtenir des suspensions dont le profil rhéologique est adapté à l'utilisation escomptée.

### EXEMPLE 3

Cet exemple illustre l'utilisation de deux polymères selon l'invention dans un procédé de préparation d'une suspension aqueuse d'hydroxyde de calcium (chaux éteinte) à haute teneur en extrait sec (> à 50 % en poids).

Deux suspensions aqueuses d'hydroxyde de calcium, ayant chacune une teneur en solides de 50 à 51 %, sont préparées dans cet exemple. On introduit dans un récipient 478 g d'eau, ainsi qu'une quantité correspondant à 1,41 % en poids sec d'un polymère, sur la base du poids total des solides dans la suspension. Ensuite, 505 g de chaux éteinte (Supercalco® 97, Carmeuse) sont introduits sous agitation dans le récipient.

Un mélangeur de type IKA® Magic Lab réglé de manière à produire un cisaillement de 82 000 s⁻¹ est ensuite alimenté par le mélange obtenu à l'étape précédente. Une boucle de recirculation permet plusieurs passages dans l'entrefer constitué par le rotor et le stator du mélangeur IKA.

Une fois cisaillée, la suspension est stockée en vue d'une évaluation de ses paramètres de viscosité, sédimentation et stabilité à 1 mois.

Les polymères utilisés dans cet exemple ont les caractéristiques suivantes :

### Essai 3-1 : selon l'invention

Le copolymère a la composition suivante (en % en poids par rapport au poids total du copolymère) :
- 7,44 % de monomères d'acide méthacrylique,
- 92,56 % de monomères de formule (I) : R - X - R' dans laquelle R représente une fonction méthacrylate, R' désigne l'hydrogène, X représente une structure comportant 46 unités d'oxyde d'éthylène OE et 15 unités d'oxyde de propylène OP, disposées de manière aléatoire.
   Masse moléculaire : 110 000 - 150 000 g/mol.
   Neutralisation partielle au NaOH ; pH : 3-4,5.

### Essai 3-2 : selon l'invention

Le copolymère a la composition suivante (en % en poids par rapport au poids total du copolymère) :
- 19,8 % de monomères d'acide méthacrylique,
- 3 % de monomères d'acide acrylique, et
- 77,2 % de monomères de formule (I) : R - X - R' dans laquelle R représente une fonction méthacrylate, R' désigne l'hydrogène, X représente une structure comportant 46 unités d'oxyde d'éthylène OE et 15 unités d'oxyde de propylène OP, disposées de manière aléatoire.
   Masse moléculaire : 34 000 - 44 000 g/mol.
   Neutralisation totale NaOH ; pH : 7,7.

Les résultats de sédimentation et de différentes mesures de viscosité sont présentés dans le tableau 3 ci-dessous :

**Tableau 3**

| **Essais** | | **Sédimentation T0** | **viscosité apag T0 10 rpm** | **viscosité apag T0 100 rpm** | **viscosité avag T0+1m 10 rpm** | **viscosité avag T0+1m 100 rpm** | **viscosité apag T0+1m 10 rpm** | **viscosité apag T0+1m 100 rpm** |
|---|---|---|---|---|---|---|---|---|
| **3-1** | 50.4 % chaux | 0 % | 980 | 393 | 4900 | 1980 | 1930 | 687 |
| **3-2** | 50,56 % chaux | 0 % | 530 | 261 | 13600 | 3048 | 3300 | 839 |

| | | | | | | | | |
|---|---|---|---|---|---|---|---|---|
| Apag : après agitation Avag : avant agitation | | | | | | | | |

Les résultats démontrent qu'il est possible, selon le procédé de la présente invention, et en utilisant des copolymères hydrosolubles de structure particulière, de préparer des suspensions de chaux éteinte de concentration élevée qui restent stables dans le temps.

### EXEMPLE 4

Cet exemple illustre l'utilisation de deux polymères selon l'invention dans un procédé de préparation d'une suspension aqueuse d'hydroxyde de calcium à partir de deux types différents de chaux éteinte de départ, à savoir une chaux présentant un diamètre moyen de particules situés entre 4 et 5 µm (Supercalco® 97, Carmeuse) et une chaux présentant un diamètre moyen de particules situés entre 2 et 3 µm (Supercalco® 97/20, Carmeuse).

Plusieurs suspensions aqueuses d'hydroxyde de calcium, ayant chacune une teneur en solides de 48 ± 1 %, sont préparées dans cet exemple. On introduit dans un récipient 503 g d'eau, ainsi qu'une quantité correspondant à 1,41 % en poids sec d'un polymère (sur la base du poids total des solides dans la suspension). Ensuite, 485 g de chaux éteinte, précisément Supercalco® 97 (Carmeuse) dans les essais 4-1 et 4-3, ou Supercalco® 97/20 (Carmeuse) dans les essais 4-2 et 4-4 sont introduits sous agitation dans le récipient.

Un mélangeur de type IKA® Magic Lab réglé de manière à produire un cisaillement de 82 000 s⁻¹ est ensuite alimenté par le mélange obtenu à l'étape précédente.

Une boucle de recirculation permet plusieurs passages dans l'entrefer constitué par le rotor et le stator du mélangeur IKA.

Une fois cisaillé, la suspension est stockée en vue d'une évaluation de ces paramètres de viscosités, sédimentation et stabilité à 1 mois.

Les polymères utilisés dans cet exemple ont les caractéristiques suivantes :

### Essais 4-1 et 4-2 : selon l'invention

Le copolymère a la composition suivante (en % en poids par rapport au poids total du copolymère) :
- 7,44 % de monomères d'acide méthacrylique,
- 92,56 % de monomères de formule (I) : R - X - R' dans laquelle R représente une fonction méthacrylate, R' désigne l'hydrogène, X représente une structure comportant 46 unités d'oxyde d'éthylène OE et 15 unités d'oxyde de propylène OP, disposées de manière aléatoire.
   Masse moléculaire : 110 000 - 150 000 g/mol.
   Neutralisation partielle au NaOH ; pH : 3-4,5.

### Essais 4-3 et 4-4 : selon l'invention

Le copolymère a la composition suivante (en % en poids par rapport au poids total du copolymère) :
- 19,8 % de monomères d'acide méthacrylique,
- 3 % de monomères d'acide acrylique, et
- 77,2 % de monomères de formule (I) : R - X - R' dans laquelle R représente une fonction méthacrylate, R' désigne l'hydrogène, X représente une structure comportant 46 unités d'oxyde d'éthylène OE et 15 unités d'oxyde de propylène OP, disposées de manière aléatoire.
   Masse moléculaire : 34 000 - 44 000 g/mol.
   Neutralisation totale NaOH ; pH : 7,7.

Les résultats de sédimentation et de différentes mesures de viscosité sont présentés dans le tableau 4 ci-dessous :

**Tableau 4**

| **Essais** | | **Sédimentation T0** | **Viscosité APAG T0 10 rpm** | **Viscosité APAG T0 100 rpm** |
|---|---|---|---|---|
| 4-1 | INV | 0 % | 300 | 159 |
| 4-2 | INV | 0 % | 280 | 203 |
| 4-3 | INV | 0 | 250 | 152 |
| 4-4 | INV | 0 % | 190 | 126 |

| | | | | |
|---|---|---|---|---|
| Apag : après agitation Avag : avant agitation | | | | |

Les résultats démontrent qu'il est possible, selon le procédé de la présente invention, en utilisant des copolymères hydrosolubles de structure particulière, de préparer des suspensions de chaux éteinte de concentration élevée qui restent stables dans le temps, quelque soit la granulométrie de départ de la chaux éteinte.

### EXEMPLE 5

Cet exemple a pour objet d'illustrer les taux de carbone organique (TOC ou Total Organic Carbon) présents dans la phase aqueuse des suspensions de chaux dispersées avec les polymères de l'art antérieur ou avec les polymères de l'invention, et ainsi de déterminer les concentrations en polymère libre dans la phase aqueuse.

Cet exemple permet également d'illustrer les teneurs en ions Ca²⁺ solubles présents dans la phase aqueuse des suspensions de chaux dispersées avec les polymères de l'art antérieur ou avec les polymères de l'invention.

### Procédé de préparation des suspensions

Plusieurs suspensions aqueuses d'hydroxyde de calcium, ayant chacune une teneur en solides de 48 ± 1 %, sont préparées dans cet exemple. On introduit dans un récipient 503 g d'eau, ainsi qu'une quantité correspondant à 1,41 % en poids sec d'un polymère (sur la base du poids total des solides dans la suspension), ledit polymère étant selon l'art antérieur ou selon la présente invention. Ensuite, 485 g de chaux éteinte (Supercalco® 97, Carmeuse) sont introduits sous agitation dans le récipient.

Un mélangeur de type IKA® Magic Lab réglé de manière à produire un cisaillement de 82 000 s⁻¹ est ensuite alimenté par le mélange obtenu à l'étape précédente. Une boucle de recirculation permet plusieurs passages dans l'entrefer constitué par le rotor et le stator du mélangeur Ika.

### Essai 5-1

Le copolymère a la composition suivante (en % en poids par rapport au poids total du copolymère) :
- 7,44 % de monomères d'acide méthacrylique,
- 92,56 % de monomères de formule (I) : R - X - R' dans laquelle R représente une fonction méthacrylate, R' désigne l'hydrogène, X représente une structure comportant 46 unités d'oxyde d'éthylène OE et 15 unités d'oxyde de propylène OP, disposées de manière aléatoire.
   Masse moléculaire : 110 000 - 150 000 g/mol.
   Neutralisation partielle au NaOH ; pH : 3-4,5.

### Essai 5-2

Le copolymère a la composition suivante (en % en poids par rapport au poids total du copolymère) :
- 12,8 % de monomères d'acide acrylique,
- 87,2 % de monomères de formule (I) : R - X - R' dans laquelle R représente une fonction méthacrylate, R' désigne l'hydrogène, X représente une structure comportant 46 unités d'oxyde d'éthylène OE et 15 unités d'oxyde de propylène OP, disposées de manière aléatoire.
   Masse moléculaire : 38 000 - 52 000 g/mol.
   Neutralisation partielle NaOH ; pH : 3-4,5.

Ce copolymère ne comportant pas de monomères d'acide méthacrylique est un copolymère hors invention.

### Essai 5-3

Le polymère utilisé est un homopolymère hors invention, disponible dans le commerce sous le nom de Rheosperse® 3010, Coatex, France et constitué de monomères d'acide acrylique, 100 % neutralisé avec de l'hydroxyde de sodium (poids moléculaire : 4 000 g/mol).

Les suspensions obtenues sont filtrées.

On prélève et on analyse un échantillon du filtrat selon les méthodes décrites ci-dessous.

### Mesure du TOC :

Le TOC (Total Organic Carbon) est mesuré à l'aide d'un Shimadzu TOC-V CSH, au moyen d'une méthode basée sur une méthode d'oxydation catalytique par combustion à 680°C.

Les atomes de carbone des échantillons sont oxydés en CO₂. Le gaz éluant pousse le CO₂ dans un système qui permet l'élimination des molécules H₂O et des composés halogénés. Un détecteur IR mesure la concentration en CO₂. Une courbe de calibration permet de déterminer la concentration en carbone dans l'échantillon.

### Dosage des ions :

La teneur en ions est évaluée au moyen d'une chromatographie ionique en utilisant un équipement du type Metrohm 761 Compact IC. La séparation des ions et des molécules polaires est basée sur leur charge.

Les résultats des mesures de TOC et teneurs en ions Ca²⁺ libres sont données dans le tableau 5 ci-dessous :

**Tableau 5**

| **Essais** | | **Ca2+ ppm** | **TOC ppm** | **Concentration en polymère ppm** |
|---|---|---|---|---|
| **5-1** | INV | 1064 | 1640 | 396 |
| **5-2** | HINV | 995 | 3900 | 856 |
| **5-3** | AANT | 291 | 100 | 17 |

On constate tout d'abord que les teneurs en ions Ca²⁺ libres varient de manière importante en fonction de la nature du polymère utilisé. Cette teneur en ions Ca²⁺ libres dans une suspension de chaux dispersée avec un homopolymère d'acide acrylique (essai 5-3) est faible comparativement à celle d'une suspension aqueuse de chaux dispersée avec un copolymère présentant un squelette acide (méth)acrylique et de chaînes latérales poly(alkylèneglycol) (essais 5-1 et 5-2).

En outre, bien que les quantités de polymère de départ (1,41 % en poids sec) soient identiques pour chacune des suspensions, on note que les concentrations en polymère dans le filtrat de chaque suspension varient de manière importante en fonction du polymère utilisé. Lorsque le polymère utilisé est un homopolymère d'acide acrylique, la concentration en polymère soluble dans la phase aqueuse est quasiment nulle. En outre, il reste moins de copolymère libre dans le filtrat de la suspension de chaux lorsqu'on utilise un copolymère selon l'invention. Sans être lié par une théorie quelconque, on peut penser que la structure particulière du copolymère selon l'invention est adaptée à la nature chimique de la chaux, ce qui améliore les interactions chimiques entre le copolymère et les particules de Ca(OH)₂. On trouve moins de copolymère libre dans les suspensions de chaux préparées selon le procédé de l'invention en utilisant un copolymère de structure particulière, car une plus grande quantité de celui-ci est adsorbé à la surface des particules de chaux éteinte. On démontre ainsi que soumettre une suspension aqueuse concentrée de chaux à une opération de cisaillement dans des conditions spécifiques en présence d'un copolymère selon l'invention permet d'obtenir une suspension de chaux concentrée, stable, qui est nouvelle par rapport aux suspensions de chaux de l'art antérieur, du fait des interactions chimiques particulières entre les copolymères et les particules de chaux.

## Revendications

1. Procédé de préparation d'une suspension aqueuse d'hydroxyde de calcium comprenant une teneur sèche d'au moins 40 % en poids, ayant une teneur en particules d'hydroxyde de calcium comprise entre 40 à 60 % en poids, sur la base du poids total de la suspension aqueuse, la viscosité de ladite suspension aqueuse mesurée par un viscosimètre Brookfield DVIII à 10 rpm étant entre 25 et 1 000 mPa.s à 20°C, comprenant les étapes consistant à :
a) on dispose d'un volume déterminé d'une solution aqueuse,
b) on dispose d'une quantité déterminée d'hydroxyde de calcium sous forme de poudre,
c) on dispose d'une quantité déterminée d'un copolymère constitué :
- de monomères d'acide méthacrylique et/ou de l'un quelconque de ses sels,
- éventuellement de monomères d'acide acrylique et/ou de l'un quelconque de ses sels,
- de monomères de formule (I) :
R-X-R' (I)
selon laquelle :
R représente une fonction insaturée polymérisable, notamment acrylate, méthacrylate, méthacryluréthane, vinyl ou allyl,
R' désigne l'hydrogène ou un groupe alkyle ayant de 1 à 4 atomes de carbone,
X représente une structure comportant n unité(s) d'oxyde d'éthylène OE et m unité(s) d'oxyde de propylène OP, disposées de manière aléatoire ou de manière régulière,
m et n sont 2 entiers non nuls et compris entre 1 et 150,
d) on ajoute sous agitation à au moins une partie de ladite solution aqueuse au moins une partie de la quantité dudit copolymère,
e) on ajoute sous agitation à la solution aqueuse de l'étape d) au moins une partie de ladite quantité dudit hydroxyde de calcium,
f) on applique au mélange résultant de l'étape e) un cisaillement homogène de degré de cisaillement supérieure à 50 000 s⁻¹,
g) éventuellement, au cours de l'étape f), on ajoute la quantité résiduelle dudit copolymère et/ou dudit hydroxyde de calcium.

2. Procédé selon la revendication 1, selon lequel le copolymère présente une masse moléculaire comprise entre 30 000 et 200 000 g/mol telle que déterminée par chromatographie d'exclusion stérique (CES).

3. Procédé selon l'une quelconque des revendications précédentes, selon lequel ledit monomère de formule (I) est tel que n et m sont deux entiers non nuls et n+m > 17.

4. Procédé selon l'une quelconque des revendications précédentes, selon lequel la fonction R dudit monomère de formule (I) représente la fonction méthacrylate.

5. Procédé selon l'une quelconque des revendications précédentes, selon lequel la fonction R' dudit monomère de formule (I) représente H ou CH₃.

6. Procédé selon l'une quelconque des revendications précédentes, selon lequel ledit monomère de formule (I) est constitué de, exprimé en pourcentage en poids de chacun de ses constituants :
- 5 à 30 % en poids de monomères d'acide méthacrylique et/ou de l'un quelconque de ses sels,
- 0 à 10 % en poids de monomères d'acide acrylique et/ou de l'un quelconque de ses sels,
- 70 à 95 % en poids de monomères de formule (I).

7. Procédé selon l'une quelconque des revendications précédentes, selon lequel on utilise un mélangeur du type rotor-stator pour réaliser l'étape f).

8. Procédé selon l'une quelconque des revendications précédentes, selon lequel le dispositif utilisé pour réaliser l'étape f) est équipé d'une boucle de recirculation.

9. Procédé selon l'une quelconque des revendications précédentes, selon lequel on utilise pour réaliser l'étape f) un dispositif configuré pour délivrer une puissance utile d'au moins 1 000 W/m³.

10. Suspension aqueuse d'hydroxyde de calcium comprenant une teneur sèche d'au moins 40 % en poids, ayant une teneur en particules d'hydroxyde de calcium comprise entre 40 à 60 % en poids, sur la base du poids total de la suspension aqueuse, la viscosité de ladite suspension aqueuse mesurée par un viscosimètre Brookfield DVIII à 10 rpm étant comprise entre 25 et 1 000 mPa.s à 20°C, ladite suspension étant susceptible d'être obtenue par le procédé selon l'une quelconque des revendications 1 à 9.

11. Utilisation d'une suspension aqueuse de chaux éteinte selon la revendication 10 pour le traitement des fumées industrielles, notamment pour la désulfurisation des fumées, ou pour le traitement des eaux usées domestiques, notamment potables, ou eaux usées industrielles.

## Patentansprüche

1. Verfahren zur Herstellung einer wässrigen Calciumhydroxid-Suspension mit einem Trockenmassegehalt von mindestens 40 Gew.-%, die einen Gehalt an Calciumhydroxid-Partikeln zwischen 40 und 60 Gew.-% bezogen auf das Gesamtgewicht der wässrigen Suspension aufweist, wobei die Viskosität dieser wässrigen Suspension laut Messung durch ein Viskosimeter Brookfield DVIII bei 10 U/min. zwischen 25 und 1.000 mPa.s bei 20°C liegt, das folgende Schritte umfasst:
a) Bereitstellen eines bestimmten Volumens einer wässrigen Lösung,
b) Bereitstellen einer bestimmten Menge an Calciumhydroxid in Pulverform,
c) Bereitstellen einer bestimmten Menge eines Copolymers bestehend aus:
- Monomeren aus Methacrylsäure und/oder einem beliebigen Salz davon,
- eventuell Monomeren aus Acrylsäure und/oder einem beliebigen Salz davon,
- Monomeren mit der Formel (I):
R-X-R' (I)
wobei:
R eine ungesättigte, polymersierbare Funktion, insbesondere Acrylat, Methacrylat, Methacrylurethan, Vinyl oder Allyl darstellt,
R' Wasserstoff oder eine Alkylgruppe mit 1 bis 4 Kohlenstoffatomen darstellt,
X eine Struktur mit n Ethylenoxid-Einheit(en) EO und m Propylenoxid-Einheit(en) PO darstellt, die zufällig oder regelmäßig angeordnet sind,
m und n 2 Ganzzahlen ungleich null sind und zwischen 1 und 150 liegen,
d) Beimengen unter Rühren mindestens eines Teils der Menge dieses Copolymers zu mindestens einem Teil dieser wässrigen Lösung,
e) Beimengen unter Rühren mindestens eines Teils dieser Menge dieses Calciumhydroxids zur wässrigen Lösung aus Schritt d),
f) Anwenden einer homogenen Scherung mit einem Schergrad von mehr als 50.000 s⁻¹ auf die Mischung aus Schritt e),
g) eventuell Beimengen der Restmenge dieses Copolymers und/oder dieses Calciumhydroxids im Laufe von Schritt f).

2. Verfahren nach Anspruch 1, wobei das Copolymer eine molekulare Masse zwischen 30.000 und 200.000 g/mol aufweist, wie durch sterische Ausschlusschromatographie (CES) bestimmt wird.

3. Verfahren nach einem beliebigen der vorstehenden Ansprüche, wobei dieses Monomer mit der Formel (I) so ausgewählt ist, dass n und m zwei Ganzzahlen ungleich Null sind und n+m > 17 ist.

4. Verfahren nach einem beliebigen der vorstehenden Ansprüche, wobei die Funktion R dieses Monomers mit der Formel (I) die Methacrylatfunktion darstellt.

5. Verfahren nach einem beliebigen der vorstehenden Ansprüche, wobei die Funktion R' dieses Monomers mit der Formel (I) H oder CH₃ darstellt.

6. Verfahren nach einem beliebigen der vorstehenden Ansprüche, wobei dieses Monomer mit der Formel (I), in Gewichtsprozent seiner Bestandteile ausgedrückt, besteht aus:
- 5 bis 30 Gew.-% Monomeren aus Methacrylsäure und/oder einem beliebigen Salz davon,
- 0 bis 10 Gew.-% Monomeren aus Acrylsäure und/oder einem beliebigen Salz davon,
- 70 bis 95 Gew.-% Monomeren mit der Formel (I).

7. Verfahren nach einem der vorstehenden Ansprüche, wobei ein Rotor-Stator-Mischer zur Durchführung von Schritt f) verwendet wird.

8. Verfahren nach einem der vorstehenden Ansprüche, wobei die Vorrichtung, die zur Durchführung von Schritt f) verwendet wird, mit einer Rezirkulationsschleife ausgestattet ist.

9. Verfahren nach einem der vorstehenden Ansprüche, wobei zur Durchführung von Schritt f) eine Vorrichtung verwendet wird, die zur Bereitstellung einer Nutzleistung von mindestens 1.000 W/m³ konfiguriert ist.

10. Wässrige Calciumhydroxid-Suspension mit einem Trockenmassegehalt von mindestens 40 Gew.-%, die einen Gehalt an Calciumhydroxid-Partikeln zwischen 40 und 60 Gew.-% bezogen auf das Gesamtgewicht der wässrigen Suspension aufweist, wobei die Viskosität dieser wässrigen Suspension laut Messung durch ein Viskosimeter Brookfield DVIII bei 10 U/min. zwischen 25 und 1.000 mPa.s bei 20°C liegt, wobei diese Suspension durch das Verfahren nach einem beliebigen der Ansprüche 1 bis 9 hergestellt wird.

11. Verwendung einer wässrigen Löschkalksuspension nach Anspruch 10 für die Behandlung von industriellen Rauchgasen, insbesondere für die Entschwefelung der Rauchgase, oder für die Aufbereitung von Haushaltsabwasser, insbesondere Trinkwasser, oder industriellem Abwasser.

## Claims

1. Method for the preparation of an aqueous slurry of calcium hydroxide with a dry content of at least 40% by weight, having a content in calcium hydroxide particles between 40 to 60% by weight, based on the total weight of the aqueous suspension, the viscosity of the said aqueous slurry measured by a Brookfield DVIII viscometer at 10 RPM being between 25 and 1,000 mPa.s at 20°C, including the steps consisting of:
a) providing of a specific volume of an aqueous solution,
b) providing of a specific quantity of powdered calcium hydroxide,
c) providing of a specific quantity of a copolymer consisting:
- of methacrylic acid monomers and/or any of its salts,
- possibly of acrylic acid monomers and/or any of its salts,
- monomers with the formula (I):
R-X-R' (I)
according to which:
R represents a polymerizable unsaturated group, notably acrylate, methacrylate, methacrylurethane, vinyl or allyl,
R' represents hydrogen or an alkyl group with from 1 to 4 carbon atoms,
X represents a structure with n unit(s) of ethylene oxide EO and m unit(s) of propylene oxide PO, arranged randomly or regularly,
m and n are 2 non-zero integers and are between 1 and 150,
d) to at least a part of said aqueous solution, at least a part of the quantity of the said copolymer is added under agitation,
e) to the aqueous solution of step d), at least a part of the said quantity of the said calcium hydroxide is added under agitation,
f) a homogeneous shearing level greater than 50,000 s⁻¹ is applied to the mixture resulting from step e),
g) possibly, in the course of step f), the remaining quantity of the said copolymer and/or of the said calcium hydroxide is added.

2. Method according to claim 1, according to which the copolymer has a molecular mass between 30,000 and 200,000 g/mol as determined by Gel Permeation Chromatography (GPC).

3. Method according to any of the previous claims, according to which the said monomer of formula (I) is such that n and m are two non-zero integers, and n+m > 17.

4. Method according to any of the previous claims, according to which the R group of the said monomer of formula (I) represents the methacrylate group.

5. Method according to any of the previous claims, according to which the R' group of the said monomer of formula (I) represents H or CH3.

6. Method according to any of the previous claims, according to which the said monomer of formula (I) consists of, expressed as a percentage by weight of each of its components:
- 5 to 30% by weight of methacrylic acid monomers and/or any of its salts,
- 0 to 10% by weight of acrylic acid monomers and/or any of its salts,
- 70 to 95% by weight of monomers of formula (I).

7. Method according to any of the previous claims, according to which a mixer of the rotor-stator type is used for step f).

8. Method according to any of the previous claims, according to which the device used to perform step f) is equipped with a recirculating loop.

9. Method according to any of the previous claims, according to which a device configured to deliver a useful output of at least 1,000 W/m³ is used to carry out step f).

10. Aqueous slurry of calcium hydroxide with a dry content of at least 40% by weight, having a content in calcium hydroxide particles between 40 to 60% by weight, based on the total weight of the aqueous suspension, the viscosity of the said aqueous slurry measured by a Brookfield DVIII viscometer at 10 RPM being between 25 and 1,000 mPa.s at 20°C, the said slurry being likely to be obtained by the method according to any of claims 1 to 9.

11. Use of a slaked lime aqueous slurry according to claim 10 for the treatment of industrial smoke, including for the desulfurization of smoke, or for the treatment of domestic wastewater, including drinking, or industrial wastewater.
